(19) Europäisches Patentamt / European Patent Office / Office européen des brevets

(11) **EP 4 494 034 B1**

(12) **EUROPEAN PATENT SPECIFICATION**

(45) Date of publication and mention
of the grant of the patent:
**17.06.2026 Bulletin 2026/25**

(21) Application number: **23719460.0**

(22) Date of filing: **17.03.2023**

(51) International Patent Classification (IPC):
**G06K 7/10** (2006.01)    **G06K 19/06** (2006.01)

(52) Cooperative Patent Classification (CPC):
**G06K 7/1099; G06K 19/06084**

(86) International application number:
**PCT/IB2023/052639**

(87) International publication number:
**WO 2023/175579 (21.09.2023 Gazette 2023/38)**

(54) **METHOD FOR AUTHENTICATING AND/OR IDENTIFYING AND/OR TRACING AN OBJECT, IDENTIFICATION ELEMENT AND USE OF SUCH AN IDENTIFICATION ELEMENT FOR SAID METHOD**

VERFAHREN ZUR AUTHENTIFIZIERUNG UND/ODER IDENTIFIZIERUNG UND/ODER VERFOLGUNG EINES OBJEKTS, IDENTIFIZIERUNGSELEMENT UND VERWENDUNG EINES SOLCHEN IDENTIFIZIERUNGSELEMENTS FÜR DAS VERFAHREN

PROCÉDÉ D'AUTHENTIFICATION ET/OU D'IDENTIFICATION ET/OU DE TRAÇAGE D'UN OBJET, ÉLÉMENT D'IDENTIFICATION ET UTILISATION D'UN TEL ÉLÉMENT D'IDENTIFICATION POUR LEDIT PROCÉDÉ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **17.03.2022 IT 202200005210**

(43) Date of publication of application:
**22.01.2025 Bulletin 2025/04**

(73) Proprietor: **Particular Materials S.r.l.**
**35020 Casalserugo (PD) (IT)**

(72) Inventors:
• **BERSANI, Marco**
**35124 Padova (IT)**

• **MOSCONI, Dario**
**35030 Rubano (IT)**
• **MASOTTI, Guido**
**20144 Milano (IT)**

(74) Representative: **Modiano, Micaela Nadia et al**
**Modiano & Partners**
**Via Meravigli, 16**
**20123 Milano (IT)**

(56) References cited:
**WO-A1-2017/134660      DE-A1- 102008 060 675**
**US-A1- 2008 156 654      US-A1- 2020 175 524**

**Description**

The present invention relates to a method for authenticating and/or identifying an object.

The invention can be applied in an industrial context, both to semifinished products and to finished products.

The invention can also be used in sectors like clothing, luxury goods, jewelry, pharmaceuticals, perfumery, automotive etc.

Nowadays, in order to combat counterfeiting and the fake market, systems and solutions are widely used which are adapted to guarantee the authenticity of objects and to trace it and detect any transfer between persons.

Widespread among these are security identification elements, visible or partially hidden from view, which can be detected uniquely and reproducibly, or read/measured like authentication codes, for example by way of irradiation techniques using light sources (for example UV).

Such security identification elements can be, for example:

- a particular graphic motif, such as a bar code, a QR code, a hologram, a micrograph etc.,
- a particular ink or color,
- electronic information exchange elements, such as RFID (RadioFrequency Identification) tags,
- labels and/or packaging elements with tamper-evident technology, such as seals, counter-marks or other elements adapted to indicate tampering visibly or audibly, which make it possible to easily detect unauthorized access to the object to which they are applied.

Such conventional techniques all have a number of drawbacks.

First of all, in many such conventional techniques identification elements are used which are not completely hidden from view, and this determines the drawback of needing, in some way, to modify the appearance of the product to which they are applied, with the risk of resulting in an unpleasant visual impact in the user or potential purchaser.

Furthermore, in some product sectors, such as jewelry or metallurgy, using one of these technologies is not conceivable because the appearance of the finished product would be compromised.

Another drawback of such conventional techniques derives from poor mechanical strength and resistance to high temperatures.

This means the security identification elements will be damaged if they are subjected to a minimal rise in temperature or to a mechanical stress, even of modest extent.

In order to overcome such drawbacks, in recent years the makers of anti-counterfeit systems have developed systems based on nanotechnologies which make it possible to hide the identification elements from view.

The term "nanotechnologies" means the branch of science applied to the technology involving the synthesis, engineering, integration and applications of all materials that have at least one dimension comprised between 1 and 100 nanometers.

For example, identification elements are known such as bar codes with fluorescent inks that withstand temperature increases.

However these have the drawback of not being completely hidden from view and they offer a reduced encoding capacity.

In the present description, the expression "encoding capacity" means the number and complexity of items of information that can be associated with or stored in the identification element.

Alternative solutions that are taking hold in the market are, for example, those that involve the use of phase change materials, magnetic nanoparticles, DNA sequences etc., which use identification elements that are invisible to the naked eye.

All these solutions, however, have the drawback that the security identification elements cannot be easily read/detected, it being necessary to use special techniques and apparatuses, often very cumbersome and expensive.

Furthermore, the application of such techniques/apparatuses for reading/detecting the security identification elements involves methods that are lengthy and inconvenient.

DE102008060675A1 discloses a method of authenticating and/or identifying an article containing a chemical marking agent, which is substantially inseparably enclosed in an inert substrate used as a carrier and contains selected chemical elements and/or compounds in the form of marker elements, in concentrations based on a predetermined encryption code, which method comprises the steps of: i) qualitatively and/or quantitatively identifying the marker elements of the chemical marking agent, and ii) comparing the values identified in step (i) with the predetermined encryption code.

US2008/156654A1 discloses designs, fabrication and applications of nanostructures made of an alloy of two or more different metal elements to provide a unique identification code based on the composition of the alloy. Such compositionally encoded nanostructures can be in various geometries including nanoparticles, nanowires and nanotubes. A single-step electroplating process may be used to form alloy nanowires without separate electroplating steps.

WO2017/134660A1 discloses an anti-counterfeit marking technique by means of a superficial deposition of films or coatings for verifying authenticity of exclusively metal objects using x-ray fluorescence (XRF) analysis.

US2020/175524A1 discloses a method of preparing a complex microscopic colloidal mixture formulation and a method of authenticating a product containing a code attached thereto, by means of reading the code through the use of a microfluidic instruments, which code is a mixture of different hard bodied colloidal particles and polymeric particles having different properties, which are present in set ratios. The code is extracted from the product and is checked with data that was originally applied to the product to determine its authenticity.

The aim of the present invention is to provide a method for authenticating and/or identifying and/or tracing an object that is capable of improving the known art in one or more of the above mentioned aspects.

Within this aim, an object of the invention is to provide a method for authenticating and/or identifying and/or tracing an object in which the identification elements have high thermal resistance and mechanical strength and are not subject to deterioration as a consequence of rises in temperature or mechanical stresses.

Another object of the invention is to provide a method for authenticating and/or identifying and/or tracing an object that makes it possible to use identification elements that are completely hidden from view.

A further object of the invention is to provide a method for authenticating and/or identifying and/or tracing an object that makes it possible to rapidly and easily read/detect the identification elements.

Another object of the invention is to provide a method for authenticating and/or identifying and/or tracing an object that uses identification elements that have a considerable encoding capacity.

Furthermore, the present invention sets out to overcome the drawbacks of the background art in a manner that is alternative and/or supplementary to any existing solutions.

Another object of the invention is to provide a method for authenticating and/or identifying and/or tracing an object that is highly reliable, easy to implement and of low cost.

In accordance with the invention, there is provided a method for authenticating and/or identifying and/or tracing an object, as defined in the appended claims.

Further characteristics and advantages of the invention will become better apparent from the detailed description that follows of a preferred, but not exclusive, embodiment of the method for authenticating/identifying an object according to the invention, which is illustrated by way of non-limiting example in the accompanying drawings wherein:

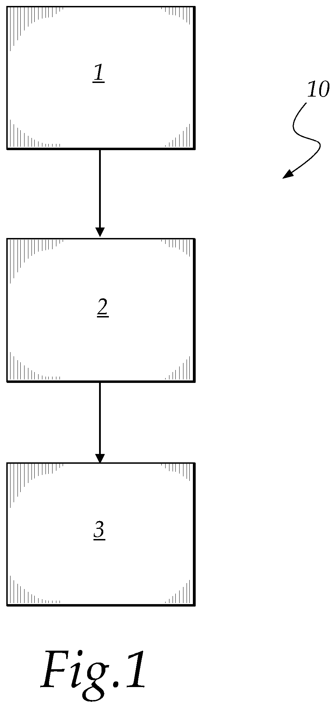

- Figure 1 is a block diagram of a method for authenticating and/or identifying and/or tracing an object, according to the invention.

With reference to the figure, a method for authenticating and/or identifying and/or tracing an object, according to the invention, is generally designated by the reference numeral 10.

The method 10 comprises the following steps:

- a first step 1 of associating a given unique code with a given identification element, on the basis of the concentrations of at least some of the chemical elements that constitute such identification element,
- a second step 2 of applying/associating the identification element to/with the object to be authenticated and/or identified and/or traced,
- a third step 3 of detecting the unique code by way of detecting the concentrations of the chemical elements that constitute the identification element.

The identification element is a nanoparticle-based substance.

Such nanoparticle-based substance is a powder of nanoparticles and/or a paste of nanoparticles dispersed in water and/or solvent.

The identification element is, for example, a powder of nanoparticles, advantageously constituted by an n-ary oxide.

In the present description, the expression "n-ary oxide" means an oxide constituted by a number "n" of elements in variable proportion.

In alternative embodiments of the method 10, the identification element is represented by a nanoparticle-based substance constituted by: hydroxides and/or borides and/or carbides and/or nitrides and/or fluorides and/or silicides and/or phosphides and/or sulfides and/or arsenides and/or selenides and/or antimonides and/or tellurides and/or metallic alloys that are zero-valent, etc.

Such unique code, associated with the identification element, is composed of:

- one or more letters, each one identifying a given chemical element of the composition of such nanoparticles,
- and/or a plurality of numbers, each one defining the concentration of a respective chemical element of the composition of such nanoparticles.

The letters identifying the chemical elements do not necessarily correspond to the letters that identify the chemical elements in the periodic table of the elements, but can be different and/or encrypted.

Similarly, the numbers that define the concentration of the chemical elements need not correspond to the percentages of the elements in the nanoparticles, but can be different and/or encrypted.

Alternatively, the unique code associated with the identification element is composed of:

- a letter that identifies a reference chemical element of the composition of such nanoparticles,
- and/or a series of numbers, each one defining the relative concentration, with respect to the reference element, of other elements of the composition which are used as encoding elements.

In the present description, the expression "relative concentration" means the atomic concentration of each individual chemical element with respect to the total concentration of the elements measured.

Advantageously, the chemical elements which compose the identification element are, by way of non-limiting example, lanthanum, cesium, praseodymium, yttrium, dysprosium, neodymium, strontium, europium, gadolinium, zirconium, barium.

It should be noted that, before the application of the method, during the process of production of the powder of nanoparticles of the identification element, by controlling the corresponding ratios between the chemical elements present in the composition during the synthesis of the nanoparticles, it is possible to encode a particular code of interest by way of the relative concentrations of the elements, which are optionally normalized with respect to a reference element included in the composition.

Consider, for example, an identification element (nanoparticle) constituted by the following hexary oxide:

$$A_xB_yC_wD_zE_jO_k,$$

where:

- A, B, C, D and E are the chemical elements that constitute the oxide,
- O is oxygen,
- x, y, w, z, j are values that can vary between 0 and 1, representing the concentration of the respective elements A, B, C, D, E in the composition,
- k is the stoichiometric value of the oxygen necessary to balance the valency of the elements A-E.

The unique code associated with such identification element is "$A_xB_yC_wD_zE_j$", which can be encrypted according to a code chosen deliberately in advance.

Alternatively, taking the same identification element and:

- A as the reference element,
- B, C, D and E as encoding elements,

the unique code associated with such element is "Aprst", where p, r, s and t are the numeric values referring to the relative concentrations of B, C, D and E, with respect to the encoding element A, as a function of the resolution of the technique or of the instrument for detecting the concentrations of the chemical elements that constitute the identification element, during the third step 3.

Advantageously, the third step 3 is performed by way of a preset one of the following techniques and/or apparatuses:

- atomic absorption spectroscopy (AAS),
- inductively coupled plasma mass spectrometry (ICP-MS),
- atomic emission spectroscopy (AES), regardless of the method with which the emission is obtained (for example: electric arc, laser, flame, inductively coupled plasma etc.)
- XRF spectrophotometry (X-ray fluorescence spectroscopy), optionally using a portable device,
- scanning electron microscope, of the SEM-EDX (Scanning Electron Microscope - Energy Dispersive X-ray Analysis) type.

Each one of these techniques and/or apparatuses has sufficient resolution to distinguish relative concentrations of the encoding elements lower than 10% with respect to the reference element.

In the present description, the term "resolution" means the minimum appreciable variation of the quantity under examination over the entire spectrum measured.

For example, for XRF analysis the resolution is greater than 100 eV.

The resolution in XRF is the ability to distinguish extremely close emission lines.

It should be noted that, as a function of:

- the number of the chemical elements used in the composition of the identification element,
- the resolution of the techniques and/or apparatuses for detecting the concentrations of the chemical elements that constitute the identification element,

it is possible to encode a considerable number of unique codes.

It should also be noted that by mixing the nanoparticles it is possible to obtain an even greater number of unique codes, by way of defining a plurality of secondary unique codes, that are the result of mixing the nanoparticles.

For the purposes of example, consider the identification element with the composition $A_{100}B_{83}C_{47}D_{61}E_{09}O_k$, wherein

- A is the reference element,
- B, C, D, E are the encoding elements,
- O is stoichiometric oxygen,
- the subscripts indicate the relative concentrations of the elements considered.

If we use an instrument with a resolution of 10% of the encoding element A, the unique code detected during the third step 3 is "8561".

With an instrument with a resolution of 10% of the element A, therefore in a decimal system, $10^4$ combinations and a corresponding number of unique codes are possible.

If we use an instrument with a resolution of 5% of the encoding element A, the code detected becomes "179122".

Therefore, with an instrument with a resolution of 5% of the element A, in a vigesimal system, $20^4$ combinations and a corresponding number of unique codes are possible.

In general we have the following formula:

$$Number\ of\ codes=(100/Percentage\ resolution)^{(Number\ of\ elements\ in\ composition\ -\ 1)}$$

It should be noted that a method according to the invention enables the use of a high number of unique codes even with a low number of chemical elements at the base of the composition of the identification element.

The second step 2 of applying/associating said identification element to/with the object to be authenticated and/or identified, occurs in one or more of the following ways.

In a first way, the nanoparticle-based substance that constitutes the identification element is introduced and/or embedded in a matrix constituted by the raw material of the object to be authenticated.

This occurs, for example, by way of dispersion:

- as an additive in polymeric masterbatches for objects made of plastic material,
- in the metallic melted state, in the case of objects made of metallic material, like jewelry.

In particular, the nanoparticle-based substance of the identification element is introduced into the matrix in a percentage by weight that can vary from 0.001% to 10% of the weight of the matrix, and preferably comprised between 0.1 and 1% of the weight of the matrix.

A second way entails a distributed surface application of the nanoparticle-based substance on one or more surfaces of the finished object to be authenticated/identified.

This can occur, for example, on yarns, fabrics, hide, paper and other porous materials that define one or more surfaces of the object to be authenticated/identified/traced.

This occurs by spraying a mixture that comprises:

- the nanoparticles that define the identification element,
- a solvent,
- a dispersant/coupling agent,
- other optional binders and/or additives.

Such solvent is, for example, water with the nanoparticles in the order of 0.3% by weight, or ethyl alcohol with the nanoparticles in the order of 0.5% by weight.

Such dispersant/coupling agent is, for example, a wetting agent with a percentage by weight in the order of 10% with respect to the quantity of nanoparticles, or a surfactant agent with a percentage by weight in the order of 10% with respect to the quantity of nanoparticles.

Such dispersant is, for example, the one known by the commercial name of "DISPERBYK® 192", produced by the BYK Chemie company in Germany.

One binder that can be used in the method 10 is, for example, the one known by the commercial name of "chitosan" produced by the Thermo Scientific company, with a percentage by weight in the order of 1%, and the addition of acetic acid with a percentage by weight in the order of 0.002%.

One additive that can be used in the method 10 is, for example, the surfactant additive known by the commercial name of "BYK®", produced by the BYK Chemie company in Germany, with a percentage by weight in the order of 0.5% with respect to the total of the formulation.

Other additives that can be used in the method 10 are: plasticizers and/or fluidifying agents and/or colorants and/or spreading agents and/or antistatic agents and/or thickeners agents and/or opacifiers and/or anchoring agents, etc.

Alternatively, it is possible to co-formulate the nanoparticles that define the identification element with an ink for screen printing and/or digital printing and/or for surface decoration and to apply such ink to at least one of the surfaces of the object to be authenticated/identified/traced.

In the present description, the term "co-formulate" means dispersing the nanoparticles in the ink and optimizing the formulation in order to render the ink obtained usable for the printing and/or writing and/or coloring of surfaces.

In a further variation, it is possible to deposit a layer of powder of nanoparticles that constitutes the identification element, by electrochemistry, using a surface treatment of the galvanic type on the object to be authenticated/identified/-traced.

In a third way, a label is provided by applying a uniform layer of powder of nanoparticles that constitutes the identification element on a small area, in order to form a tag to be applied locally on the objects to be authenticated/identified/traced such as products, components, labels, documents, etc.

For example, the area of this tag can have dimensions comprised between 0.1 mm$^2$ and 5 cm$^2$, preferably in the order of 1 cm$^2$, with a thickness of the layer of 0.1 mm.

In general, after the second step 2 of the method 10, the percentage by weight of the identification element on the object to be authenticated/identified is, preferably, less than 1%.

It should be noted that, according to the chemical elements chosen to provide the powder of nanoparticles and their concentration in the composition, it is possible to synthesize identification elements of different colors and shades and this makes it possible to choose the identification element that is best adapted and most advantageous for the object to be authenticated/identified/traced, on the basis of the correspondence between the color of the object (at the surface level or of the material from which it is made) and of the identification element.

It should be noted that the nanoparticles of the powder that constitutes the identification element:

- are dispersed effectively and evenly in polymeric and/or metallic and/or ceramic and/or vitreous and/or paper matrices, but also on inks,
- penetrate deeply, by virtue of their nanometric size, into the porosity and into the surface roughness of the materials on which they are applied.

Furthermore, at the nanometric scale, adhesive forces are very strong, in the order of 100 Mn/m, such that the bond between the nanoparticles and the substrate to which they are applied is stable when subjected to chemical or mechanical actions, within the limits of stability of the substrate.

From experimental tests, it has been found that the transfer of the nanoparticles to the environment and their dispersion therein does not occur, or in any case occurs at a negligible level, according to standardized tests, such as for example:

- Tests for skin and intradermal irritation (UNI EN ISO 10993-10);
- Tests for in cytotoxicity (ISO 10993-5);
- Tests for cellular vitality (ISO10993-1:2018).

It should also be noted that the dimension of the nanoparticles of the powder that constitutes the identification element and its concentration in the matrix or on the surface with which the latter is associated are such as not to produce variations in the optical, mechanical, thermal, chemical behavior of the object to which it is applied.

Furthermore, in the method according to the invention, the nanoparticles of the powder of the identification element are, substantially, chemically inert materials and do not release ions that could start cytotoxic processes or processes that are damaging to the environment.

In the present description, the expression "chemically inert materials" means that the nanoparticles do not start and do not participate in any chemical reactions that occur in the environment in which they are located.

Also, it should be noted that the percentage of the identification element on the object to be authenticated/identified that is preferably less than 1% ensures that such identification element cannot constitute either a risk to human health or a negative environmental impact factor.

In practice, the use of the method for authenticating and/or identifying and/or tracing an object, according to the invention, is the following.

After having synthesized a powder of nanoparticles that constitutes a given identification element, with a given chemical composition, a given unique code is defined/associated with such identification element, on the basis of the concentrations of at least some of its constituent chemical elements.

Then such identification element is associated with/applied to the object to be identified and/or authenticated and/or traced.

When it is necessary to identify/trace the object, a reading/detection is carried out of the unique code associated with the object, by way of the detection of the concentrations of the chemical elements that constitute the identification element associated with/applied to it.

It should be noted that, with a method according to the invention, the identification element can be inserted in all of the material so as to ensure the practical impossibility of counterfeiting given that the very material of which the object is made would need to be tampered with. The identification element and the material of which the object with which it is associated is made are inseparable.

With such method the origin of the object is completely certified and verifiable simply on the basis of the detection of the concentration of some chemical elements in the identification element.

In a variation of embodiment of the method 10, according to the invention, the unique code associated with the identification element is in turn associated with an NFT (Non-Fungible Token), thus effectively creating a connection between the real-world object and a digital certificate that attests to its ownership/origin.

The association between the NFT and the code of the nanoparticle-based substance is achieved by inserting the encrypted code of the identification element into the code string (hash code) that characterizes the NFT, thus irreversibly associating the two elements.

This also enables the end customer to verify the authenticity of the object using a blockchain, whereby the technology for the method according to the invention adds a level of security covering the link between the finished object and its digital certificate.

In practice it has been found that the invention fully achieves the intended aim and objects by providing a method for authenticating and/or identifying and/or tracing an object in which the identification elements have high thermal resistance and mechanical strength and are not subject to deterioration as a consequence of rises in temperature or mechanical stresses.

With the invention a method has been devised for authenticating and/or identifying and/or tracing an object that makes it possible to use identification elements that are completely hidden from view.

Furthermore, with the invention a method has been provided for authenticating and/or identifying and/or tracing an object that makes it possible to rapidly and easily read/detect the identification elements.

Also, with the invention a method has been devised for authenticating and/or identifying and/or tracing an object that uses identification elements that have a considerable encoding capacity.

The invention, thus conceived, is susceptible of numerous modifications and variations, all of which are within the scope of the appended claims.

**Claims**

1. A method (10) for authenticating and/or identifying and/or tracing an object, comprising the following steps:

   - a first step (1) of associating a given unique code with a given identification element, on the basis of the concentrations of at least some of the chemical elements that constitute said identification element,
   - a second step (2) of applying/associating said identification element to/with said object,
   - a third step (3) of detecting said unique code by way of detecting said concentrations of said chemical elements that constitute said identification element, said identification element being a powder of nanoparticles, wherein said nanoparticles being constituted by an n-ary oxide, said n-ary oxide comprising a plurality of chemical elements in variable proportions, and wherein the method further comprising a process of production of the powder of nanoparticles of the identification element, which includes controlling the corresponding ratios between the chemical elements present in the composition during the synthesis of the nanoparticles, thereby to encode a particular code of interest by way of the relative concentrations of the chemical elements, and wherein said unique code is composed of:

- one or more letters, each one of which identifies a given chemical element within the composition of said nanoparticles,
- and/or a plurality of numbers, each one defining the concentration of a respective chemical element within the composition of said nanoparticles; or
- a letter that identifies a reference chemical element of the composition of said nanoparticles,
- and/or a series of numbers, each one defining the relative concentration, with respect to said reference element, of other elements of said composition of said nanoparticles, said other elements being used as encoding elements.

2. The method (10) according to claim 1, **characterized in that** said second step (2) occurs by way of the introduction and/or embedding of a nanoparticle-based substance in a matrix constituted by the raw material of said object.

3. The method (10) according to claim 1, **characterized in that** said second step (2) occurs by way of a distributed surface application on one or more surfaces of said object.

4. The method (10) according to claim 3, **characterized in that** said second step (2) occurs by spraying a mixture comprising:

   - said nanoparticles,
   - a solvent,
   - a dispersant/coupling agent.

5. The method (10) according to claim 4, **characterized in that** said mixture comprises one or more binders and/or additives.

6. The method (10) according to claim 3, **characterized in that** said second step (2) occurs by co-formulating said nanoparticles with an ink for screen printing and/or digital printing and/or for surface decoration and by applying said ink to at least one of the surfaces of said object.

7. The method (10) according to claim 3, **characterized in that** said second step (2) occurs by electrochemically depositing a layer of said nanoparticles, by way of a surface treatment of the galvanic type on said object.

8. The method (10) according to claim 1, **characterized in that** said second step (2) occurs by providing a label by way of the application of a uniform layer of said nanoparticles on an area in order to form a tag to be applied locally to said object.

9. The method (10) according to one or more of the preceding claims, **characterized in that** said third step (3) is performed by way of a preset one of the following methods and/or apparatuses:

   - atomic absorption spectroscopy (AAS),
   - inductively coupled plasma mass spectrometry (ICP-MS),
   - atomic emission spectroscopy (AES),
   - XRF spectrophotometry,
   - scanning electron microscope, of the SEM-EDX type.

10. The method (10) according to one or more of the preceding claims, **characterized in that** an Non-Fungible Token, NFT, is associated with said unique code.

**Patentansprüche**

1. Ein Verfahren (10) zur Authentifizierung und/oder Identifizierung und/oder Verfolgung eines Objekts, folgende Schritte umfassend:

   - einen ersten Schritt (1) des Verknüpfens eines bestimmten eindeutigen Codes mit einem bestimmten Kennzeichnungselement auf der Grundlage der Konzentrationen mindestens einiger der chemischen Elemente, die das Kennzeichnungselement bilden,
   - einen zweiten Schritt (2) des Anbringens/Verknüpfens des Kennzeichnungselements auf/mit dem Objekt,

- einen dritten Schritt (3) des Erfassens des eindeutigen Codes durch Erfassen der Konzentrationen der chemischen Elemente, welche das Kennzeichnungselement bilden, wobei das Kennzeichnungselement ein Pulver aus Nanopartikeln ist, wobei die Nanopartikel aus einem n-Valenz-Oxid bestehen, wobei das n-Valenz-Oxid eine Vielzahl chemischer Elemente in veränderlichen Anteilen umfasst und wobei das Verfahren weiter einen Prozess der Herstellung des Pulvers von Nanopartikeln des Kennzeichnungselements umfasst, welcher die Steuerung der entsprechenden Verhältnisse zwischen den chemischen Elementen, die in der Zusammensetzung vorliegen, während der Synthese der Nanopartikel einschließt, um so einen bestimmten Code von Interesse mit Hilfe der relativen Konzentrationen der chemischen Elemente zu codieren, und wobei der eindeutige Code aus Folgendem besteht:

- einen oder mehrere Buchstaben, die jeweils für ein bestimmtes chemisches Element in der Zusammensetzung der Nanopartikel stehen,

- und/oder einer Vielzahl von Zahlen, die jeweils die Konzentration eines bestimmten chemischen Elements in der Zusammensetzung der Nanopartikel angeben; oder

- einem Buchstaben, der ein chemisches Referenzelement der Zusammensetzung der Nanopartikel angibt,

- und/oder einer Reihe von Zahlen, die jeweils die relative Konzentration anderer Elemente in der Zusammensetzung der Nanopartikel mit Bezug auf das Referenzelement angeben, wobei die anderen Elemente als Codierelemente verwendet werden.

2. Das Verfahren (10) gemäß Anspruch 1, **dadurch gekennzeichnet, dass** der zweite Schritt (2) durch Einschleusen und/oder Einbetten einer Substanz auf Nanopartikel-Basis in eine Matrix ausgeführt wird, die aus dem Rohmaterial des Objekts besteht.

3. Das Verfahren (10) gemäß Anspruch 1, **dadurch gekennzeichnet, dass** der zweite Schritt (2) durch eine verteilte Auftragung auf eine oder mehrere Oberflächen des Objekts ausgeführt wird.

4. Das Verfahren (10) gemäß Anspruch 3, **dadurch gekennzeichnet, dass** der zweite Schritt (2) durch das Aufsprühen einer Mischung stattfindet, die Folgendes umfasst:

- die Nanopartikel,
- ein Lösungsmittel,
- ein Dispergiermittel/Haftmittel.

5. Das Verfahren (10) gemäß Anspruch 4, **dadurch gekennzeichnet, dass** die Mischung ein oder mehr Bindemittel und/oder Zusatzstoffe umfasst.

6. Das Verfahren (10) gemäß Anspruch 3, **dadurch gekennzeichnet, dass** der zweite Schritt (2) durch Koformulieren der Nanopartikel mit einer Tinte für Siebdruck und/oder Digitaldruck und/oder zur Oberflächendekoration und durch Auftragen der Tinte auf mindestens eine der Oberflächen des Objekts stattfindet.

7. Das Verfahren (10) gemäß Anspruch 3, **dadurch gekennzeichnet, dass** der zweite Schritt (2) durch elektrochemisches Auftragen einer Schicht der Nanopartikel, durch eine Oberflächenbehandlung vom galvanischen Typ, auf das Objekt stattfindet.

8. Das Verfahren (10) gemäß Anspruch 1, **dadurch gekennzeichnet, dass** der zweite Schritt (2) durch Aufbringen eines Markers durch Auftragen einer homogenen Schicht der Nanopartikel auf eine Fläche stattfindet, um eine Markierung zu bilden, die lokal auf das Objekt aufgetragen werden soll.

9. Das Verfahren (10) gemäß einem oder mehreren der obigen Ansprüche, **dadurch gekennzeichnet, dass** der dritte Schritt (3) durch Voreinstellung einer/eines der folgenden Verfahren und/oder Vorrichtungen durchgeführt wird:

- Atomabsorptionsspektroskopie (AAS),
- Massenspektrometrie mit induktiv gekoppeltem Plasma (inductively coupled plasma mass spectrometry, ICP-MS),
- Atomemissionsspektroskopie (AES),
- XRF-Spektralphotometrie,
- Rasterelektronenmikroskop vom SEM-EDX-Typ.

10. Das Verfahren (10) gemäß einem oder mehreren der obigen Ansprüche, **dadurch gekennzeichnet, dass** ein Non-Fungible Token, NFT, mit dem eindeutigen Code verknüpft ist.

**Revendications**

1. Procédé (10) d'authentification et/ou d'identification et/ou de traçage d'un objet, comprenant les étapes suivantes :

   - une première étape (1) d'associer un code unique donné à un élément d'identification donné, sur la base des concentrations d'au moins certains des éléments chimiques qui constituent ledit élément d'identification,
   - une deuxième étape (2) d'appliquer/associer ledit élément d'identification audit objet,
   - une troisième étape (3) de détecter ledit code unique en détectant lesdites concentrations desdits éléments chimiques qui constituent ledit élément d'identification, ledit élément d'identification étant une poudre de nanoparticules, où lesdites nanoparticules sont constituées d'un oxyde n-aire, ledit oxyde n-aire comprenant une pluralité d'éléments chimiques en proportions variables, et où le procédé comprend en outre un processus de production de la poudre de nanoparticules de l'élément d'identification, qui inclut le contrôle des rapports correspondants entre les éléments chimiques présents dans la composition pendant la synthèse des nanoparticules, afin d'encoder un code particulier d'intérêt au moyen des concentrations relatives des éléments chimiques, et où ledit code unique est composé de :
   - une ou plusieurs lettres, chacune identifiant un élément chimique donné dans la composition desdites nanoparticules,
   - et/ou d'une pluralité de nombres, chacun définissant la concentration d'un élément chimique respectif dans la composition desdites nanoparticules ;
   ou
   - une lettre qui identifie un élément chimique de référence de la composition desdites nanoparticules,
   - et/ou une série de nombres, chacun définissant la concentration relative, par rapport audit élément de référence, d'autres éléments de ladite composition desdites nanoparticules, lesdits autres éléments étant utilisés comme éléments de codage.

2. Procédé (10) selon la revendication 1, **caractérisé en ce que** ladite deuxième étape (2) s'effectue par l'introduction et/ou l'incorporation d'une substance à base de nanoparticules dans une matrice constituée de la matière première dudit objet.

3. Procédé (10) selon la revendication 1, **caractérisé en ce que** ladite deuxième étape (2) s'effectue par une application superficielle répartie sur une ou plusieurs surfaces dudit objet.

4. Procédé (10) selon la revendication 3, **caractérisé en ce que** ladite deuxième étape (2) consiste à pulvériser un mélange comprenant :

   - lesdites nanoparticules,
   - un solvant,
   - un agent dispersant/agent de couplage.

5. Procédé (10) selon la revendication 4, **caractérisé en ce que** ledit mélange comprend un ou plusieurs liants et/ou additifs.

6. Procédé (10) selon la revendication 3, **caractérisé en ce que** ladite deuxième étape (2) consiste à coformuler lesdites nanoparticules avec une encre pour sérigraphie et/ou à impression numérique et/ou à la décoration de surface, et à appliquer ladite encre sur au moins une des surfaces dudit objet.

7. Procédé (10) selon la revendication 3, **caractérisé en ce que** ladite deuxième étape (2) consiste à déposer par voie électrochimique une couche desdites nanoparticules, au moyen d'un traitement de surface de type galvanique sur ledit objet.

8. Procédé (10) selon la revendication 1, **caractérisé en ce que** ladite deuxième étape (2) consiste à fournir une étiquette par l'application d'une couche uniforme desdites nanoparticules sur une zone afin de former une étiquette destinée à être appliquée localement sur ledit objet.

9. Procédé (10) selon une ou plusieurs des revendications précédentes, **caractérisé en ce que** ladite troisième étape (3) est réalisée au moyen des suivants méthodes prédéfinies et/ou appareils parmi les :

- spectroscopie d'absorption atomique (AAS),
- spectrométrie de masse à plasma à couplage inductif (ICP-MS),
- spectroscopie d'émission atomique (AES),
- spectrophotométrie XRF,
- microscope électronique à balayage, de type SEM-EDX.

10. Procédé (10) selon une ou plusieurs des revendications précédentes, **caractérisé en ce qu'**un jeton non fongible, NFT, est associé audit code unique.

Fig.1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102008060675 A1
- US 2008156654 A1
- WO 2017134660 A1
- US 2020175524 A1